# EUROPEAN PATENT SPECIFICATION

(11) **EP 1 715 202 B1**
(45) Date of publication and mention of the grant of the patent: **07.04.2010**
(21) Application number: 06112895.5
(22) Date of filing: 21.04.2006
(51) Int. Cl.: F16C 19/18, B60B 27/00

(54) **Bearing apparatus for a driving wheel of vehicle**
Lagervorrichtung für ein Antriebsrad eines Fahrzeuges
Dispositif de roulement pour roue motrice de véhicule

(30) Priority: 22.04.2005 JP 2005124589
(43) Date of publication of application: 25.10.2006
(73) Proprietor: NTN Corporation, Osaka-shi, Osaka 550-0003 (JP)
(72) Inventor: Shigeoka, Kazuhisa, Shizuoka-ken (JP); Kawamura, Hiroshi, Shizuoka-ken (JP)
(74) Representative: Cohausz & Florack

(56) References cited:
- EP-A- 1 470 936
- JP-A- 2000 110 840
- JP-A- 2003 237 305
- US-B1- 6 217 220
- US-B1- 6 250 814

## Description

### BACKGROUND OF THE INVENTION

### Field of the Invention

The present invention relates to a bearing apparatus for a driving wheel of vehicle for supporting a driving wheel of vehicle such as an automobile, and more particularly to a bearing apparatus for a driving wheel of vehicle torque transmittably and separably connected to an outer joint member of a constant velocity universal joint and structured as a unit of a hub wheel and a double row rolling bearing.

### Description of Background Art

The power transmitting apparatus for transmitting the engine power of vehicle to its wheels transmits the power from a engine to wheels and is required to be able to permit its radial and axial displacement from wheels and moment variation. Accordingly a drive shaft interposed between the engine and the driving wheel is connected at its one end to a differential gear via a constant velocity universal joint of slide type and at the other end to the driving wheel via a bearing apparatus for a driving wheel including an immovable constant velocity universal joint.

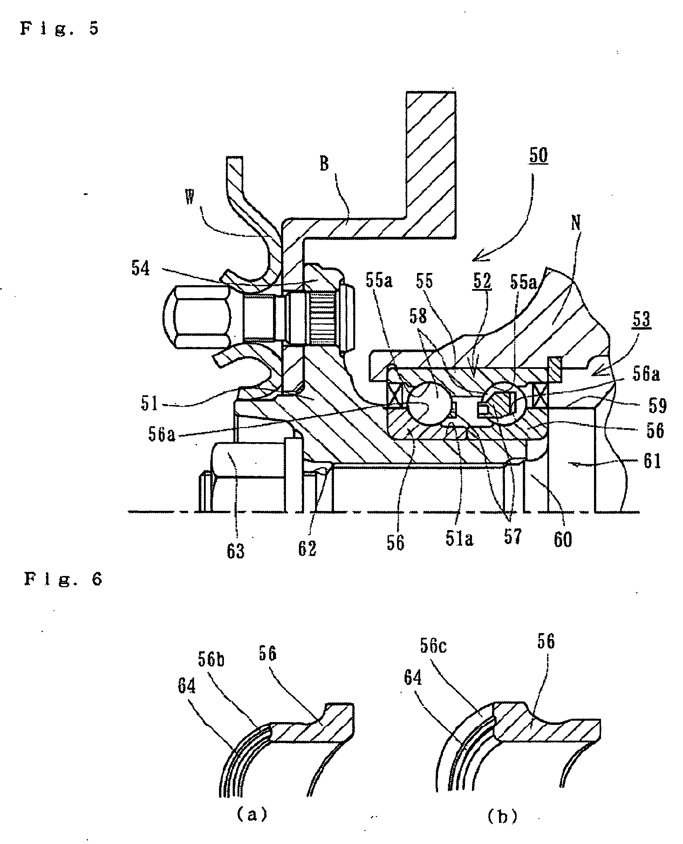

There have been proposed several types of bearing apparatus for a wheel of vehicle and for example one shown in Fig. 5 is known. The bearing apparatus for a wheel of vehicle 50 comprises a hub wheel 51 able to mount on its one end a driving wheel W and a brake rotor B, a double row rolling bearing 52, and an immovable constant velocity universal joint 53 connected to a hub wheel 51 for transmitting a power of the drive shaft (not shown) to the hub wheel 51.

The hub wheel 51 has a wheel mounting flange 54 integrally formed therewith at its one end for mounting thereon the driving wheel W and a brake rotor B and an axially extending cylindrical portion 51a of a smaller diameter. The double row rolling bearing 52 is formed as a double row angular ball bearing comprising an outer ring 55 formed on its inner circumferential surface with double row outer raceway surfaces 55a and arranged between a knuckle N forming part of a suspension apparatus and the cylindrical portion 51a of the hub wheel 51; a pair of inner rings 56 each being formed with inner raceway surface 56a arranged oppositely to the double row outer raceway surfaces 55a; and a double row balls 58 freely rollably contained via a cage 57 between the outer and inner raceway surfaces 55a and 56a.

The constant velocity universal joint 53 comprises a cup-shaped mouth portion (not shown), a shoulder portion 59 forming a bottom portion of the mouth portion, and an outer joint member 61 integrally formed with a shaft portion 60 axially extending from the shoulder portion 59. The outer joint member 61 is adapted to be inserted into the hub wheel 51 via serrations in a torque transmitting manner. The shaft portion 60 is inserted into the hub wheel 51 until the shoulder portion 59 abuts the inner ring 56 of the double row rolling bearing 52 and fastened at a predetermined fastening torque by a securing nut 63 onto a male thread 62 formed on the shaft portion 60. Thus hub wheel 51 and the outer joint member 61 can be axially separably connected each other.

It is known that the driving wheel W is driven by an engine with a large torque via a slide type constant velocity universal joint (not shown) at a low engine speed for example at a start of vehicle. Thus torsional deformation is caused in the drive shaft and this torsional deformation also causes torsional deformation in the inner ring 56 of the double row rolling bearing 52 supporting the drive shaft. When a large tortional deformation is caused in the drive shaft, if there is a circumferential gap between the serrations of the shaft portion 60 of the outer joint member 61 inserted into the hub wheel 51, the so-called "stick slip noise" would be caused by abrupt slip caused between the contacting surfaces of the outer joint member 61 and the inner ring 56.

As one means for preventing the generation of the stick slip noise, surface machining treatment has been applied on the end surface of the inner ring 56 abutting to the shoulder portion 59 of the outer joint member 61. That is, as shown in Figs. 6 (a) and (b), grease grooves 64 are formed on the end faces 56b and 56c of the inner rings 56 for holding and promoting lubricant such as grease in the grease grooves 64 in order to reduce frictional resistance between the abutting surfaces and thus to reduce or prevent the generation of the stick slip noise (see Japanese Laid-open Patent Publication No. 110810/2000).

Another bearing apparatus for a driving wheel of vehicle, to be connected to an outer joint member of a constant velocity universal joint and structured as a unit of a hub wheel and a double row rolling is known from EP 1 470 936 A1.

Further, a bearing apparatus according to the preamble of claim 1 is disclosed in JP 2003 237305A.

### Disclosure of the Invention

### Problems to be solved by the Invention

However the lubricant such as grease applied to the abutting surfaces (end surfaces of the inner ring 56) is often liable to contact to a surface of a working table and thus soils it during its assembling processes especially when the bearing apparatus is laid on the working table with its end of inner ring side down in view of stability in upstanding condition on the table. In addition the quality of the assembled products would be spoiled by foreign matters entered in the grease from the working table.

### SUMMARY OF THE INVENTION

It is, therefore, an object of the present invention to provide a bearing apparatus for a driving wheel of vehicle which can prevent, with a simple structure, lubricant such as grease applied to the end surface of the inner ring or a caulked portion of the hub wheel from contacting to a working table and thus can prevent the lubricant from being contaminated by foreign matters entered in the lubricant from the surface of a working table.

### Means for solving problems

According to the bearing apparatus of the present invention as defined by claim 1, since lubricant is applied to the end face of the inner member abutting to the outer joint member, and a cover is mounted or) the end of the inner member, the cover comprising a cylindrical outer circumferential portion covering an outside diameter portion of the outer member, a fitting portion adapted to be inserted into the cylindrical portion and an annular bottom portion for covering the end of the inner member, it is possible to prevent the lubricant from being applied to any portion of supporting member not only in assembling steps but during transportation of the bearing apparatus and thus to ensure the quality of the bearing apparatus for a wheel of vehicle.

According to an embodiment of the present invention, since the fitting portion or the outer circumferential portion of the cover is formed with fitting ribs projected radially outward or inward from its circumferential surface at an equidistant interval in a circumferential direction, it is possible to allow plastic deformation of the fitting portion and thus to improve workability during mounting and demounting of the cover and further to prevent the cover from being easily fallen out during assembly and transportation of the bearing apparatus.

According to another embodiment of the present invention, since one or more grease grooves arc is formed on the end face of the inner member along a circumferential direction, it is possible to increase holding power of grease and to further reduce the friction resistance between mutually abutting surfaces so that generation of the stick slip noise.

According to a further another embodiment of the present invention, since the inner ring is axially secured by a caulked portion formed by plastically deforming the end of the cylindrical portion radially outward, and lubricant is applied to the end face of the caulked portion, it is possible to provide the so-called "self-retain structure" which can stably maintain the preload for holding the bearing apparatus without controlling and managing the fastening force of the nut.

### BRIEF DESCRIPTION OF THE DRAWINGS

Additional advantages of the present invention will become apparent from the subsequent description and the appended claims, taken in conjunction with the accompanying drawings, wherein:
Fig. 1 is a longitudinal-section view of a bearing apparatus for a driving wheel of vehicle of the prior art
Fig. 2 is a longitudinal-section view of a bearing apparatus for a driving wheel of vehicle According to a first embodiment of the present invention;
Fig. 3 (a) is a front elevation view of a cover of the present invention; and Fig. 3 (b) is a cross-section view taken along a line III-O-IIT in Fig. (a);
Fig. 4 is a longitudinal-section view of a bearing apparatus for a driving wheel of vehicle according to a second embodiment of the present invention;
Fig. 5 is a longitudinal-section view of a bearing apparatus for a driving wheel of vehicle of the prior art; and
Fig. 6 (a) is a partial perspective view of a inner ring of Fig. 5; and Fig. 6(b) is a partial perspective view of another inner ring of Fig. 5.

### DESCRIPTION OF THE PREFERRED EMBODIMENTS

In description below, a term "outboard side" of the bearing apparatus means a side positioned outside of a vehicle body and a term "inboard side" means a side positioned inside of a vehicle body when the bearing apparatus is mounted on the vehicle body.

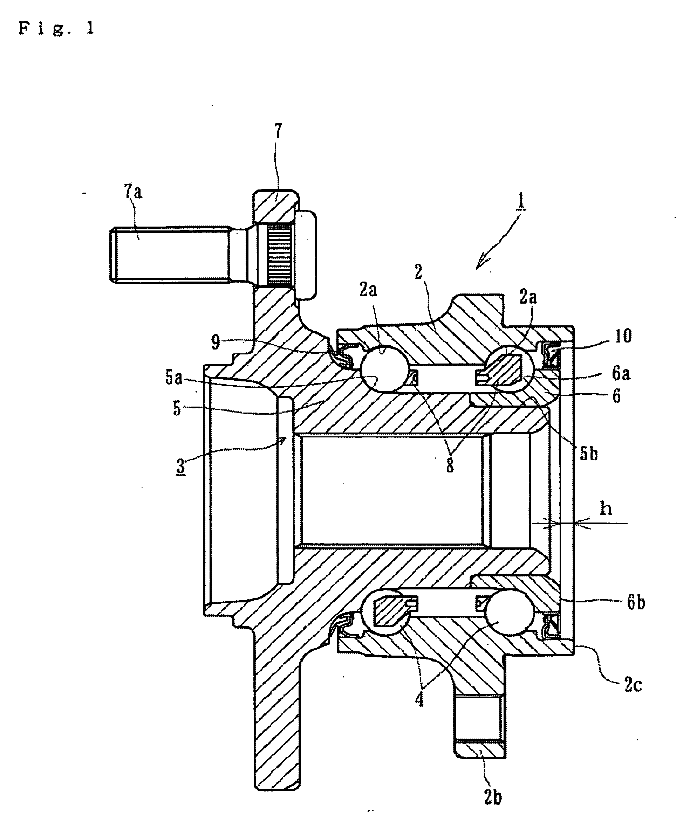

An embodiment of a bearing apparatus which does not form part of the present invention is shown in Fig. 1. The bearing apparatus is formed as a unit comprising a double row rolling bearing 1 and a hub wheel 5.

The double row rolling bearing 1 comprises an outer member 2, inner member 3, and double row rolling elements (balls) 4 contained between the outer and inner members 2 and 3. The inner member 3 comprises a hub wheel 5 having a wheel mounting flange 7 integrally formed therewith at one end thereof and also having one of inner raceway surface (outboard side raceway surface) 5a and a cylindrical portion 5b of a smaller diameter extending from the inner raceway surface 5a also integrally formed therewith, and an inner ring 6 press fitted onto the cylindrical portion 5b and another inner raceway surface (inboard side raceway surface) 6a formed on its outer circumferential surface. Hub bolts 7a for securing the wheel are secured on the wheel mounting flange 7 at an equidistant interval along its circumferential direction

The outer member 2 is integrally formed, on its outer periphery, with a body mounting flange 2b to be mounted on a suspension apparatus (not shown) and on its inner circumferential surface, with double row outer raceway surfaces 2a. Double row rolling elements (balls) 4 are rollably contained via a cage 8 between the double row outer raceway surfaces 2a and opposite inner raceway surfaces 5a and 6a. Seals 9 and 10 arranged at either ends of the outer member prevent grease contained within the bearing from leakage therefrom and rain water and dusts from entering therein.

The hub wheel 5 is made of medium carbon steel such as S53C including carbon of 0.40 - 0.80% by weight. The outboard side inner raceway surface 2a, seal land portion to which the seal 9 contacts, and the axially extending cylindrical portion 2b of the hub wheel 5 are surface hardened by high frequency induction quenching as having its surface hardness of 58 - 64 HRC. Such a quenching pattern enables to increase the mechanical strength of hub wheel 5 and to suppress the fretting at the fitting portion of the inner ring 6 and thus the durability is improve.

On the other hand, the inner ring 3 is made of high carbon chrome bearing steel such as SUJ2 and is hardened to its core by quenching as having a hardness of 58 - 64 HRC. The outer member 2 is made of medium carbon steel including carbon of 0.40 - 0.80% by weight such as S53C and the double row outer raceway surfaces 2a are hardened by high frequency induction quenching as having a surface hardness of 58 - 64 HRC. Although it is shown a double row angular ball bearing having balls 4 as rolling elements, a double row conical rolling bearing having conical roller as rolling elements may be used in the present invention. In addition, although the bearing shown is the so-called "third generation" type, it may bo used a first or second generation type for the present invention.

In this embodiment, grease including extreme-pressure additive such as molybdenum sulfide is applied to the end face 6b of a larger diameter of the inner ring 6. Thus the friction resistance relative to a mating member (in this case, an outer joint member of the constant velocity universal joint (not shown)) of mutually abutting members is reduced and thus generation of the stick slip noise is suppressed. Furthermore, the end face 2c of inboard side of the outer member 2 is formed as projecting beyond the end face 6b of the inner ring 6 by a predetermined distance "h". Such a structure makes it possible to lay the bearing apparatus on a working table with its end of inner ring side down without possibility of the lubricant being applied to the surface of a working table and without possibility of foreign matters entering into the lubricant. Thus it is possible to provide a bearing apparatus for a driving wheel of vehicle which can achieve high quality by a simple structure.

In this case, if grease grooves such as shown in Figs. 6 (a) and (b) are formed on the end face 6b of the inner ring 6, it is possible to improve the grease holding power and thus to more effectively reduce generation of the stick slip noise.

### First embodiment

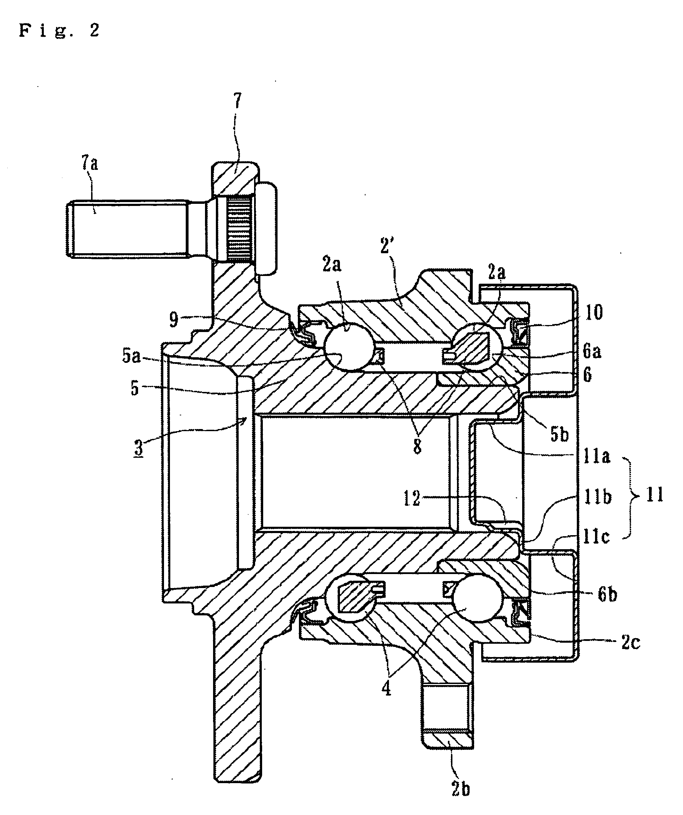

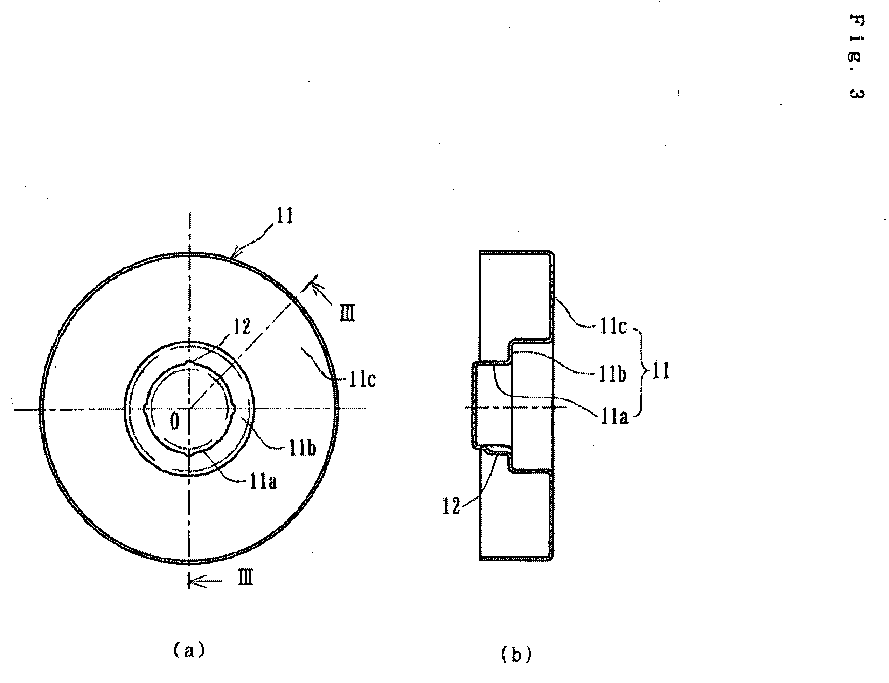

Fig. 2 is a longitudinal-section view of a bearing apparatus for a driving wheel of vehicle according to a first embodiment of the present invention; Fig. 3 (a) is a front elevation view of a cover of the present invention; and Fig. 3 (b) is a cross-section view taken along a line III-O-III in Fig. (a). Same reference numerals are used for designating same parts having same functions in the first embodiment and detail description of them will not be repeated.

In this embodiment, the inboard side end face 2c of the outer member 2' is positioned so that it is in a substantially same plane as the end face 6b of the inner ring 6 similarly to the prior art. However, it is different from the prior art that a cover 11 is arranged on the inboard end of the bearing apparatus in order to protect lubricant such as grease previously applied on the end face 6b of the inner ring from being contaminated by foreign matters.

This cover 11 is made by press forming of austenitic stainless steel (JIS SUS 304 etc.) or preserved cold rolled steel sheet (JIS SPCCetc.) to a substantially cup-shaped configuration and comprises a fitting portion 11a adapted to be inserted into the cylindrical portion 5b, a stepped portion 11b adapted to be abutted to the end face of the cylindrical portion 5b. and annular bottom portion 11c for covering the inboard end of the inner member 6. Thus, similarly to the previously described embodiment, it is possible to lay the bearing apparatus on a working table with its end of inner ring side down without possibility of the lubricant being applied to the surface of a working table and without possibility of foreign matters entering into the lubricant. Thus it is possible to provide a bearing apparatus for a driving wheel of vehicle which can achieve high quality by a simple structure. In addition this cover 11 can prevent the applied lubricant from being contaminated by foreign matters outside the bearing apparatus during its transportation. The fitting portion 11a of the cover 11 is formed with fitting ribs 12 projected radially outward from its outer circumferential surface at an equidistant interval along a circumferential direction, which fitting ribs 12 being adapted to be fitted into the cylindrical portion 5b via a predetermined interference. The fitting ribs 12 enable to elastically deform the fitting portion 11a and to improve the workability in mounting or demounting to (or from) the bearing apparatus as well as to prevent the cover 11 being from fallen out from the bearing apparatus during assembly or transportation of the bearing apparatus.

### Second embodiment

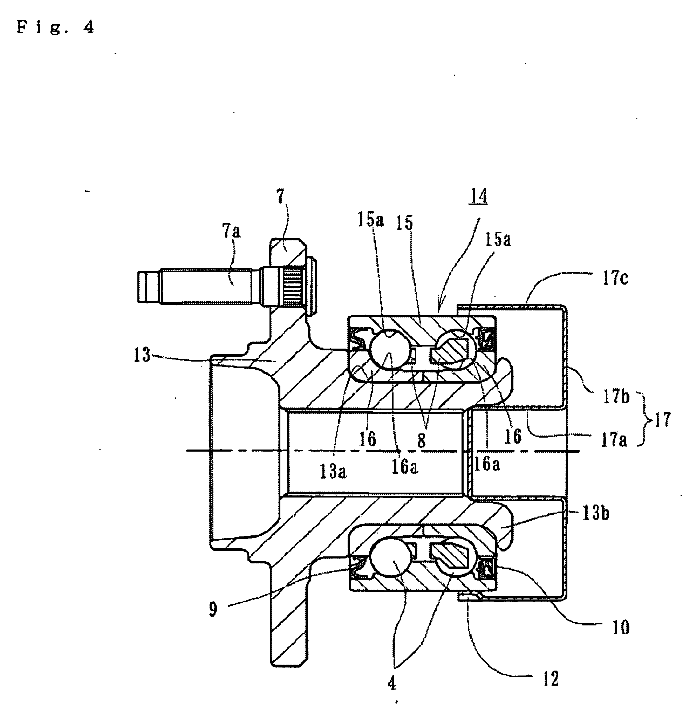

Fig. 4 is a longitudinal-section view of a bearing apparatus for a driving wheel of vehicle according to a second embodiment of the present invention, Same reference numerals are used for designating same parts having same functions in the first embodiment and thus detail description of them will not be repeated.

This bearing apparatus for a driving wheel of vehicle has a structure of the first generation type in which the hub wheel 13 and the bearing for a wheel are united. The hub wheel 5 has a wheel mounting flange 7 integrally formed therewith at one end thereof and also has a cylindrical portion 13a of a smaller diameter extending from the wheel mounting flange 7. A bearing for a wheel 14 is press fitted once the cylindrical portion 13a and secured thereon axially immovable by plastically deforming the end of the cylindrical portion radially outward to form a caulked portion 13b. Thus the so-called "self-retaining structure" can be provided for stably maintaining the preload of the bearing 14 for a long term without controlling and managing the fastening force (axial force) generated by the nut (not shown) as in the previous embodiments

The bearing 14 for a wheel of vehicle is formed as a double row angular ball bearing comprising an outer ring (outer member) 15 on which inner circumferential surface is formed with double row outer raceway surfaces 15a, a pair of inner rings 16 each of which outer circumferential surface is formed with one of double row inner raceway surfaces 16a opposite to the double row outer raceway surfaces 15a, and double row rolling elements 4 contained via the cage 8 between the outer and inner raceway surfaces 15a and 16a.

In this embodiment, lubricant such as grease is previously applied to the end face of the caulked portion 13b of the hub wheel 13 to which the shoulder portion of the outer joint member of the constant velocity universal joint (not shown) abuts. The caulked portion 13b is covered by a cover 17 mounted on the inboard end of the bearing for a driving wheel of vehicle.

This cover 17 is made by press forming of austenitic stainless steel (JIS SUS 304 etc.) or preserved cold rolled steel sheet (JIS SPCCetc.) and comprises a fitting portion 17a adapted to be inserted into the cylindrical portion 13b of the hub wheel 13, and annular bottom portion 17b for covering the caulked portion 13b and the bearing for a wheel of vehicle 14. Accordingly, similarly to the previously described embodiments, it is possible to lay the bearing apparatus on a working table with its end of inner ring side down without possibility of the lubricant being applied to the surface of a working table and without possibility of foreign matters entering into the lubricant. Thus it is possible to provide a bearing apparatus for a driving wheel of vehicle which can achieve high quality by a simple structure. An outer circumferential portion 17c of the cover is formed with fitting ribs 12 projected radially inward from its inner circumferential surface at an equidistant interval along a circumferential direction. The fitting ribs 12 enable to clastically deform the circumferential portion 17c and thus to improve the workability in mounting or demounting to (or from) the bearing apparatus.

### Applicability in industries

The bearing apparatus for a wheel of driving wheel of vehicle can be applied to the automobile manufacturing industries without causing the problem that lubricant such as grease is applied to a surface of the working table.

## Claims

1. A bearing apparatus for a driving wheel of vehicle comprising;
an outer member (2) formed with double row outer raceway surfaces (2a) on the inner peripheral surface thereof;
an inner member (5, 6) including a hub wheel (5) having a wheel mounting flange (7) integrally formed therewith at one end thereof and an axially extending cylindrical portion (5b, 13b) of a smaller diameter, and at least one inner ring (6) press fitted onto the cylindrical portion (5b, 13b), and formed with double row inner raceway surfaces (5a, 6a) arranged oppositely to the double row outer raceway surfaces (2a);
double row rolling elements (4) contained freely rollably between the outer and inner raceway surfaces (2a and 5a, 6a);
wherein an outer joint member (61) of a constant velocity universal joint (53) integrally formed with a shaft portion (60) is insertable into the inner member (5, 6) in a torque transmitting manner and axially fastenable by a nut (63) so that it is abutted to the inner member (5, 6) and wherein ;
lubricant is applied to the end face of the inner member (6) abutting to the outer joint member (61),
**characterized in that** a cover (11, 17) is mounted on the end of the inner member (6), the cover (11, 17) comprising a cylindrical outer circumferential portion (17c) covering an outside diameter portion of the outer member (2) a fitting portion (11a, 17a) adapted to be inserted into the cylindrical portion (5b, 13b) and an annular bottom portion (11c, 17b) for covering the end of the inner member (6).

2. A bearing apparatus for a driving wheel of vehicle of claim 1 wherein the fitting portion (11a, 17a) or the outer circumferential portion (17c) of the cover (11, 17) is formed with fitting ribs (12) projected radially outward or inward from its circumferential surface at an equidistant interval along a circumferential direction.

3. A bearing apparatus for a driving wheel of vehicle of claim 1 or 2 wherein one or more grease grooves (64) are formed on the end face of the inner member (6) along a circumferential direction.

4. A bearing apparatus for a driving wheel of vehicle of claim 1 or 2 wherein the inner ring (16) is axially secured by a caulked portion (13b) formed by plastically deforming the end of the cylindrical portion (13a) radially outward, and lubricant is applied to the end face of the caulked portion (13b).

## Patentansprüche

1. Lagervorrichtung für ein Antriebsrad eines Fahrzeugs, umfassend:
ein äußeres Glied (2), das auf seiner Innenumfangsfläche mit zweireihigen äußeren Laufringflächen (2a) ausgebildet ist;
ein inneres Glied (5, 6), das eine Radnabe (5) mit einem Radanbringungsflansch (7), der an einem Ende davon einstückig damit ausgebildet ist, und einem axial verlaufenden, zylindrischen Abschnitt (5b, 13b) mit einem kleineren Durchmesser und zumindest einem Innenring (6), der auf den zylindrischen Abschnitt (5b, 13b) aufgepresst ist, beinhaltet und mit zweireihigen inneren Laufringflächen (5a, 6a) ausgebildet ist, die den äußeren Laufringflächen (2a) gegenüberliegend angeordnet sind; zweireihige Rollelemente (4), die frei rollbar zwischen den äußeren und inneren Laufringflächen (2a und 5a, 6a) enthalten sind;
wobei ein äußeres Gelenkglied (61) eines Gleichlaufgelenks (53), das einstückig mit einem Wellenabschnitt (60) ausgebildet ist, derart drehmomentübertragungsfähig in das innere Glied (5, 6) einfügbar und durch eine Mutter (63) axial zu befestigen ist, dass es an das innere Glied (5, 6) angrenzt, und wobei
Schmiermittel auf die Endfläche des inneren Glieds (6), die an das äußere Gelenkglied (61) angrenzt, aufgetragen ist,
**dadurch gekennzeichnet, dass** eine Abdeckung (11, 17) auf dem Ende des inneren Glieds (6) angebracht ist, wobei die Abdeckung (11, 17) einen zylindrischen Außenumfangsabschnitt (17c), der einen Außendurchmesserabschnitt des äußeren Glieds (2) abdeckt, einen Passabschnitt (11a, 17a), der dazu geeignet ist, in den zylindrischen Abschnitt (5b, 13b) eingefügt zu sein, und einen ringförmigen unteren Abschnitt (11c, 17b) zum Abdecken des inneren Glieds (6) umfasst.

2. Lagervorrichtung für ein Antriebsrad eines Fahrzeugs nach Anspruch 1, wobei der Passabschnitt (11a, 17a) oder der Außenumfangsabschnitt (17c) der Abdeckung (11, 17) mit Passrippen (12) ausgebildet ist, die radial nach außen oder nach innen von ihrer Umfangsfläche in gleich weit entfernten Abständen entlang einer Umfangsrichtung vorstehen.

3. Lagervorrichtung für ein Antriebsrad eines Fahrzeugs nach einem der Ansprüche 1 oder 2, wobei eine oder mehrere Schmierrillen (61) auf der Endfläche des inneren Glieds (6) eine Umfangsrichtung entlang ausgebildet sind.

4. Lagervorrichtung für ein Antriebsrad eines Fahrzeugs nach einem der Ansprüche 1 oder 2, wobei der Innenring (16) durch einen verstemmten Abschnitt (13b), der durch plastisches Verformen des Endes des zylindrischen Abschnitts (13a) radial nach außen ausgebildet ist, axial befestigt ist und Schmiermittel auf die Endfläche des verstemmten Abschnitts (13b) aufgetragen ist.

## Revendications

1. Palier pour roue motrice d'un véhicule, comprenant :
un élément extérieur (2) formé de surfaces extérieures de roulement (2a) à double rangée sur leur surface périphérique intérieure ;
un élément intérieur (5, 6) comprenant un moyen de roue (5) ayant une bride de montage de roue (7), formée dans celui-ci à une de ses extrémités et une partie cylindrique s'étendant de manière axiale (5b, 13b) de plus faible diamètre, et au moins un anneau interne (6) ajusté par pression sur la partie cylindrique (5b, 13b), et formé de surfaces intérieures de roulement (5a, 6a) à double rangée, disposées en opposition aux surfaces extérieures de roulement (2a) à double rangée ;
des éléments de roulement à double rangée (4), disposés de manière à pouvoir rouler librement entre les surfaces extérieures et intérieures de roulement (2a et 5a, 6a) ; où un élément extérieur de joint (61) d'un joint universel homocinétique (53), formé d'une pièce avec une partie d'arbre (60) peut être inséré dans l'élément intérieur (5, 6) de manière à transmettre le couple et peut être fixé axialement par un écrou (63) de sorte qu'il s'appuie sur l'élément intérieur (5, 6) et
où du lubrifiant est appliqué sur la face extrême de l'élément intérieur (6) s'appuyant sur l'élément extérieur du joint (61),
**caractérisé en ce qu'**un couvercle (11, 17) est disposé sur l'extrémité de l'élément intérieur (6), le couvercle (11, 17) comprenant une partie cylindrique de circonférence extérieure (17c) couvrant une partie du diamètre extérieur de l'élément extérieur (2), une partie de fixation (11a, 17a) adaptée pour être insérée dans la partie cylindrique (5b, 13b) et une partie inférieure annulaire (11c, 17b) pour couvrir l'extrémité de l'élément intérieur (6).

2. Palier pour roue motrice d'un véhicule selon la revendication 1, où la partie de fixation (11a, 17a) ou la partie de circonférence extérieure (17c) du couvercle (11, 17) est formée de nervures de fixation (12), projetées de manière radiale, vers l'extérieur ou vers l'intérieur depuis sa surface de circonférence, à intervalles équidistants en direction de la circonférence.

3. Palier pour roue motrice d'un véhicule selon la revendication 1 ou 2, où une ou plusieurs rainures de graissage (64) sont formées sur la surface extrême de l'élément intérieur (6) en direction de la circonférence.

4. Palier pour roue motrice d'un véhicule selon la revendication 1 ou 2, où l'anneau intérieur (16) est fixé de manière axiale par une partie de matage (13b) formée par déformation plastique de l'extrémité de la partie cylindrique (13a) l'étendant de manière radiale vers l'extérieur, et le lubrifiant est applique sur la face extrême de la partie de matage (23b).
